# EUROPEAN PATENT SPECIFICATION

(11) **EP 3 312 941 B1**
(45) Date of publication and mention of the grant of the patent: **10.07.2019**
(21) Application number: 16194695.9
(22) Date of filing: 19.10.2016
(51) Int. Cl.: H01R 13/627, H01R 13/639

(54) **CONNECTOR ASSEMBLY WITH DUAL SECONDARY LOCK**
VERBINDERANORDNUNG MIT DOPPELTER SEKUNDÄRVERRIEGELUNG
ENSEMBLE CONNECTEUR À DOUBLE VERROUILLAGE SECONDAIRE

(43) Date of publication of application: 25.04.2018
(73) Proprietor: Aptiv Technologies Limited, St. Michael (BB)
(72) Inventor: LEHMANN, René, 90766 Fürth (DE); REGNIER, Vincent, 91080 Spardorf (DE); SIWEK, Bartlomiej, 30-348 Krakow (PL)
(74) Representative: Mader, Joachim

(56) References cited:
- EP-A1- 2 840 664
- EP-A1- 2 966 735
- CN-A- 105 531 886
- US-B1- 8 968 021

## Description

### TECHNICAL FIELD OF INVENTION

The present invention relates to a connector assembly, in particular for airbag restraint systems. The connector assembly comprises a connector housing and secondary locking means. The connector further has release means to unlock a locked connector. The release means are housed in a retraced area of the connector.

### BACKGROUND OF INVENTION

In many applications, the safe coupling of connectors is of high importance. For example, in the case of car safety systems, as e.g. airbag systems in passenger cars, the connectors used for the connection of an airbag to its ignition base have to be provided with reliable safety systems. To ensure that the connectors cannot become loose unintentionally, secondary locking means are used in addition to the primary locking means to guarantee a safe mechanical coupling.

An example of a connector with a secondary locking means is described in EP2966735. This document discloses a connector which can be mated with a corresponding counter connector being part of an airbag ignition mechanism. In assembled condition, (i.e. the connector is mated with the corresponding counter connector), the connector is fixed to the counter connector by means of flexible latching arms. During mating of the connectors, these arms are deflected and snap back into corresponding latching clearances of the counter connector, when fully mated. The connector has a secondary locking device and a safety spring element, which serves to hold the secondary locking means in a position, in which the secondary locking means is mounted to the connector housing so that it does not hinder mating or un-mating of the connector with a corresponding counter connector. Once the locking arms are inserted, they inhibit bending of the latching arms out of the corresponding latching clearances. Thus, the mechanical coupling of the connectors is secured.

Hereby the secondary locking means is movable between a first and a second position. When placed in its second position, it serves to secure the mating of the connector housing to a corresponding counter connector. During mating, the spring is biased to cause the secondary lock to move automatically into a locked position when the connector assembly is fully mated with is corresponding counter connector, without need for an operator to push the secondary locking means into the locked position.

The secondary locking means has protrusions that protrude on opposite sides out of the connector housing. The protrusions require elongated openings to allow movement of the protrusions. These protrusions work as handles to unlock the connector by an operator in case the connector has to be released for service or repair. While connecting to the counter connector the handles are moved contrary to the mating direction by the counter connector. They move until the connector is in the final position and then snap back to there inactive position. To unlock the connector the handles have to be pulled contrary to the mating direction. This movement has to be applied on both handles at the same time. While assemble the connector to a counter connector or an electronic unit in a narrow installation space, problems with the handles can pop up. Electrical wires or other parts can move accidentally between a handle and the counter connector and disturb this way a proper movement of the secondary locking means. This can lead to an only partially mated connection. If the connector is only partially mated, it might occur that the connector assembly electrically functions correctly, since the electrical contacts of the connector and the corresponding counter connector are connected (i.e. current conduction is possible), but the mechanical connection is not according to the desired specification. Furthermore dirt and even metal parts can move to the inside of the connector by the elongated openings for the secondary locking means. Therefore, in one aspect, the present invention improves the state of the art by providing a connector assembly with an improved secondary locking mechanism. Furthermore present invention reduces also the production costs of the connector assembly.

These and other objects which become apparent upon reading the following description are solved by a connector assembly according to independent claim 1.

### SUMMARY OF THE INVENTION

The present application relates to a connector assembly, in particular for airbag restraint systems. The connector assembly comprises a connector housing and secondary locking means (i.e. a secondary lock).

Generally, the connector housing comprises a plug-in portion and two primary latching arms, arranged on opposite sides of the plug-in portion. A secondary locking means, assigned to the connector housing and arranged relatively movable to the connector housing from an open position to a locked position, said locking means comprise blocking portions that are adapted to block a release movement of the latching arms when the locking means is in its locked position. The secondary locking means comprises two separate locking members and each of the two separate locking members is assigned to one of the primary latching arms to block a release movement of the assigned latching arm and each of the two separate locking members is adapted to be independently moveable between the open position and the locked position. Each locking member comprises an actuating release handle to allow an un-latching of the primary latching arm, wherein the release handles are arranged adjacent to each other.

According to the invention, the connector assembly is further comprising a cover that, at least partly, surrounding the secondary locking means around a mating axis. The cover has at least one, in mating direction elongated, opening and wherein a portion of the secondary locking means closes the opening in the open position and the locked position. The elongated opening is nearly always covert by a portion of the secondary locking means. The opening is not covert in the moment of connecting or disconnecting the connector. These moments are usually only fractions of a second. Due this the possibility that dirt or particles enter the connector is nearly impossible.

The cover comprises an outer surface and a deepening. The deepening extends from the outer surface inwards to the cover and along the mating axes, defining a channel. The at least one elongated opening is located in the channel. The position of the opening in the channel protects the connector furthermore from being penetrated by dirt or particles because the elongated opening is backspaced from the cover surface.

Advantageously, the release handles are fully received in the channel. The release handles doesn't protrude out of the connector body. Due that it's nearly impossible that an electrical wire hinder the release handles in their movement. Furthermore such a release handles arrangement allows to engage a tool to the release handle to release the connector from the counter connector, while the operating tool doesn't protrude out of the connector body. Due that engaging tool doesn't required extra packaging space for connector service.

In a preferred embodiment, the channel comprises two channel walls opposed to each other and spaced apart from each other, extending perpendicular from the outer surface towards the cover. A bottom wall connects the two channel walls. This kind of geometry makes it easy to produce the cover for the connector e.g. by injection molding. Preferably, the elongated opening starts on the end of the cover that is adjacent to the plug-in portion of the connector and extends contrary to a mating direction. The elongated opening has a slit shaped form beginning on the end of the cover. This makes it possible to design the cover shaped. The cover can be put on the preassembled locking members whereby parts of the locking members slide through the slit. According to a preferred embodiment the locking members are identical to each other. Making the locking members identical read uses production costs and a high amount. If the locking members are made of plastics, the locking members can be produced with only one tool on an injection molding machine.

In a preferred embodiment, the locking member has an elongated body, extending along the mating axes. An elongated body makes it possible to guide the body very precise in the connector housing.

Advantageously, the locking member comprises a block spring shaft that protrudes perpendicular to the mating axes and wherein a center axis of the block spring shaft and the mating axis of the connector define a mirror plane. Each locking member is mirror symmetrical to the mirror plane. This design makes it impossible to position the locking member in a wrong way, while assembling it to the connector. The locking member is usable in each possible position.

Preferably, a first wall of each locking member extends perpendicular from the elongated body along the mating axes. A second wall of each locking member extends perpendicular and along the mating axis from a portion of a free end of the first wall. The first wall defines the cover for the elongated opening by covering the opening on the inside of the cover. The second wall protrudes through the opening in the cover. The second wall also defines a part of the handle.

According to a preferred embodiment a third wall of each locking member extends perpendicular and along the mating axis from a portion of a free end of the second wall. The third wall enlarges the release handles and makes them more robust.

In a preferred embodiment, the first wall and/or the second wall of each locking member comprise sloped portions that are sloped relative to the mating axis. The walls increase in size along mating direction. Thanks to the sloped portions a release tool moved from the backside of the connector, where wires enter the connector, can be guided to the release handles. The tool is guided in the channel towards the counter connector. The sloped portions guide the tool over an edge of the release handles until the tool locks on the release handles.

Advantageously, a free end of the second wall and/or a free end of the third wall of each locking member, facing toward the counter connector, defines the release handle. The release handle has a flat surface that faces the counter

connector. This makes it possible to engage a tool to the release handle to release the connector from the counter connector.

Preferably, the length of the first wall of each locking member along the mating axis is adapted to cover the openings. The first wall can be designed as needed to cover the elongated opening in the cover. This gets more freedom in design of the connector.

According to a preferred embodiment the locking member comprises at least two guiding protrusions and the cover comprises guiding areas on inner walls of the cover to guide the locking member while mating to the counter connector. The double guiding protrusions, with the coil spring in between, provide a very precise and strong guiding.

### Description of the preferred embodiments

In the following, the invention is described exemplarily with reference to the enclosed figures, in which
- Fig. 1: shows in a perspective view a connector comprising two separate release handles in accordance with the present invention;
- Fig. 2: shows in a perspective view the connector whereby the cover is removed to show the inner parts.
- Fig. 3: shows in a perspective view the connector whereby the cover is partly removed to show the inner parts and the arrangement of the cover;
- Fig. 4: shows in a perspective view the connector whereby one of locking members is the removed to show the opening in the cover;
- Fig. 5: shows a cut view of the connector whereby the cut layer is arranged perpendicular to the mating direction as shown in figure 4 (cut along line Ci) ;
- Fig. 6: shows a cut view of the connector whereby the cut layer is arranged perpendicular to the mating direction as shown in figure 4 (cut along line C2);
- Fig. 7: shows a cut view of the connector whereby the cut layer is arranged along the mating axis to show the position of the release handles concerning the opening;
- Fig. 8: shows in a perspective view of the locking members;
- Fig. 9: shows a side view of the locking members;
- Fig. 10: shows a side view of a locking member whereby a mirror virtual plane is displayed;
- Fig. 11: shows a top view of the locking members;

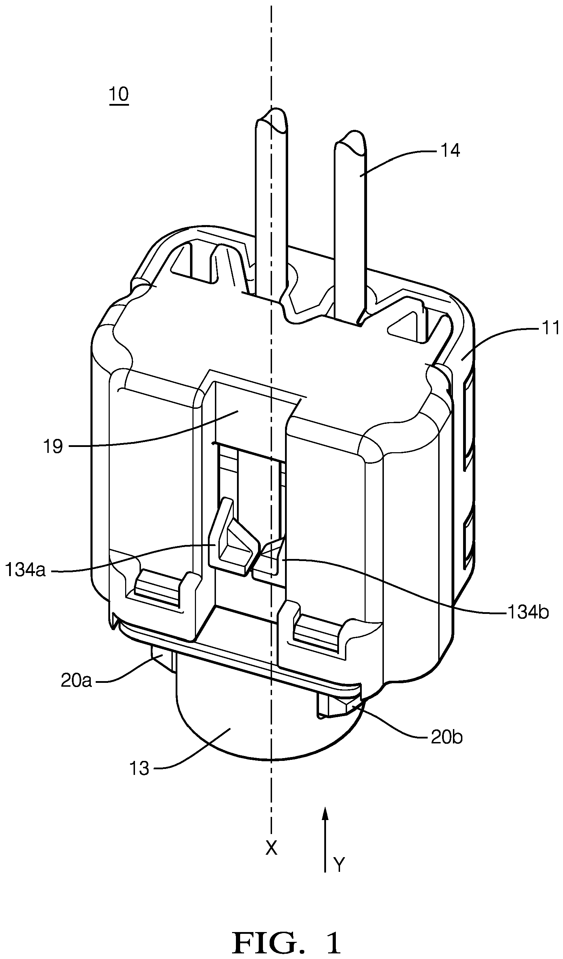

Fig. 1 shows a perspective, three-dimensional view of a connector 10 in accordance with the invention. The connector housing comprises a main body 12 and a cover 11 which is removable latched to the main body 12 by means of latch connections. At the top side of the cover 11 electrical wires 14 fed through the cover 11. At the bottom side of the main body 12 a cylindrical plug-in portion 13 is provided. The skilled person will recognize, that the plug-in portion 13 is adapted to co-operate with typical airbag squib sockets and that the device shown is thus an airbag squib connector. On opposite sides of the plug-in portion 13, two latching arms 20a, 20b are arranged. In other words, the two latching arms 20a, 20b are arranged symmetrically on opposite sides of the plugging portion 13. The latching arms provide the primary locking of the connector. The cover 11 comprising a deepening 17 in an outer surface 11b wherein the deepening 17 extends from the outer surface 11b inwards to the cover 11 and along a mating axis X, defining a channel 18, wherein two elongated openings 16 are located in the channel 18. Two actuating release handles 134a, 134b are located inside the channel 18.

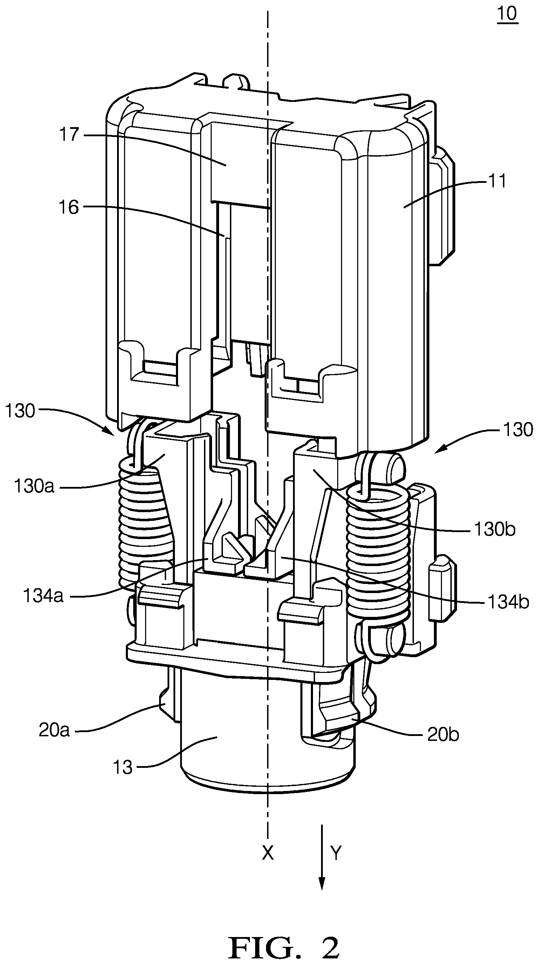

Fig. 2 shows the same device whereby the cover 11 is removed to allow a view of the interior construction of the connector. Indicated by the reference number 130, a secondary locking means is arranged moveable inside of the main body 12 of the connector housing 10. Secondary locking means 130 is shown in its locked position and consists of two distinct locking members 130a and 130b. When coupled or mated to a corresponding counter connector, the secondary locking means 130 will prevent an unintentional un-mating of the two connector parts, when in the position shown in Fig. 1. The skilled person will find in EP2966735 detailed information about how the connector interacts with the retainer of an airbag. In the open view of Fig. 2 one can see two coil springs 40a, 40b aligned along the mating axis X. The springs 40a, 40b each comprises two hook shaped end portions that are operationally connected to a locking member 130a, 130b on one end and to the main body 12 on the other end. Each locking member 130a, 130b provides a block spring shaft 138a, 138b and the main body 12 provides two body spring shafts 15a, 15b. The spring force urges the parts towards each other by pulling on the shafts. The locking members 130a, 130b are urged towards the main body 12 in mating direction Y. As can be seen the springs 40a, 40b are tensioned when the locking members 130a, 130b are in their open position. Upon mating, the springs 40a, 40b will automatically move the members 130a, 130b in the locked position. It is clear for the skilled person, that the shown springs 40a, 40b are only one example and that it is possible to use also other constructions without deviating from the core idea thereof.

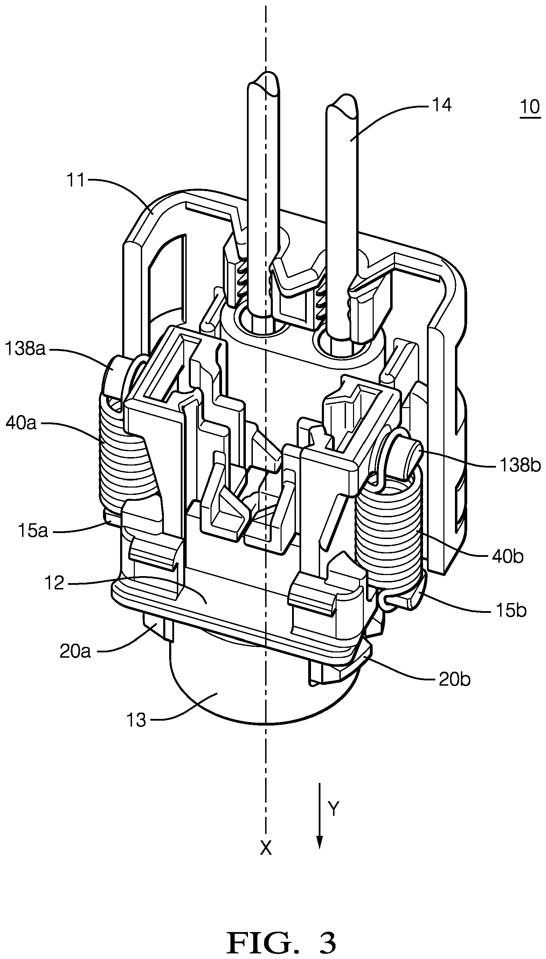

Fig. 3 shows a perspective view of a connector. The channel 18 in the cover 11 is defined by a deepening 17 in an outer surface 11b of the cover 11. The channel 18 has two channel walls 18a, 18b and a channel bottom wall 18c. In the bottom wall 18c are two openings 16. For better visibility only one blocking member 130a is assembled in the connector. The position where a second blocking member 130b usually is located, shows an empty opening 16. The openings 16 are in this embodiment elongated slits. The part of the blocking member 130a that defines the release handle 134a is located inside the channel 18. The release handle 134a is connected to the remaining blocking member 130a by a portion that passes through the opening 16.

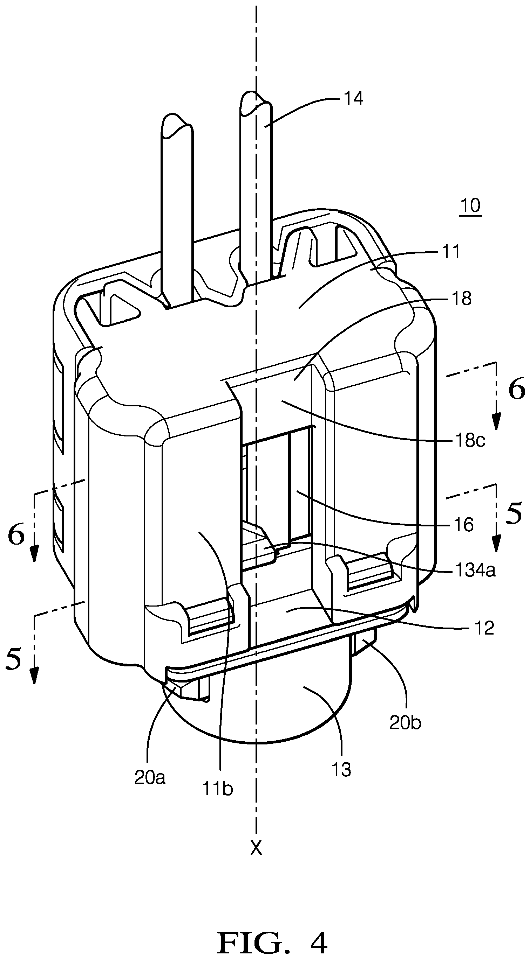

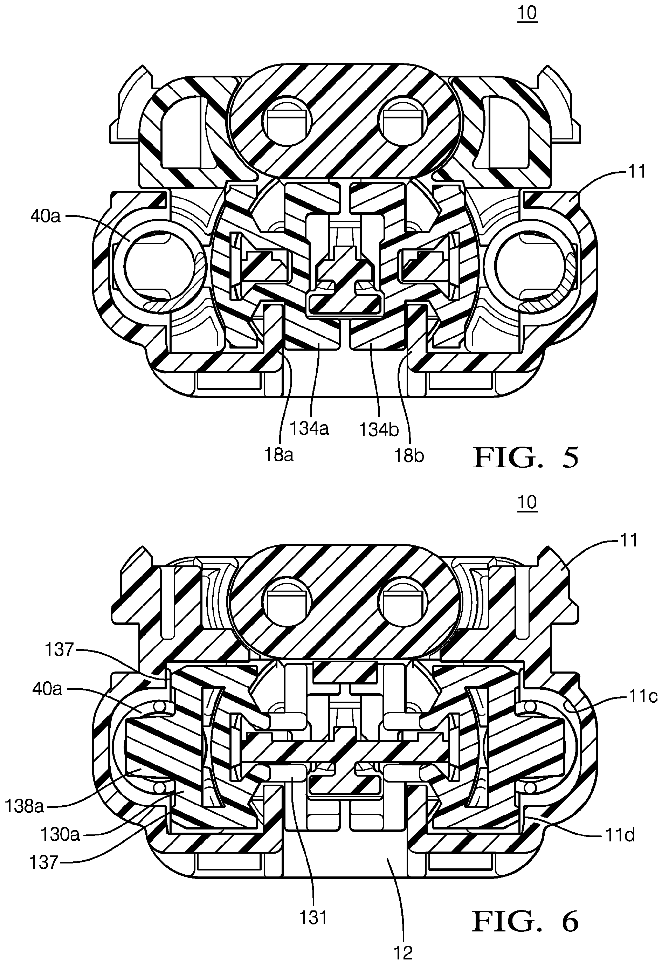

Fig. 5 shows a cut view of the connector whereby the cut layer is arranged perpendicular to the mating direction. The layer is defined by a cut along the line C1 as shown in figure 4. In this view the skilled person sees that the release handles 134a, 134b are arranged deep in the channel 18.This position of the release handles 134a, 134b protects the handles from unwanted pull actions.

Fig. 6 shows a cut view of the connector whereby the cut layer is arranged perpendicular to the mating direction. The layer is defined by a cut along the line C2 as shown in figure 4. This view demonstrates the guiding of the blocking members 130a, 130b inside the cover. The blocking members 130a, 130b have guiding protrusions 137 arranged on surfaces that are in contact with guiding surfaces 11d on inner surfaces 11c of the cover 11. The guiding protrusions 137 are arranged close to the block spring shafts 138a, 138b of the blocking members 130a,130b because the spring force pulls on the shafts and presses the guiding protrusions 137 against the guiding surfaces 11d.

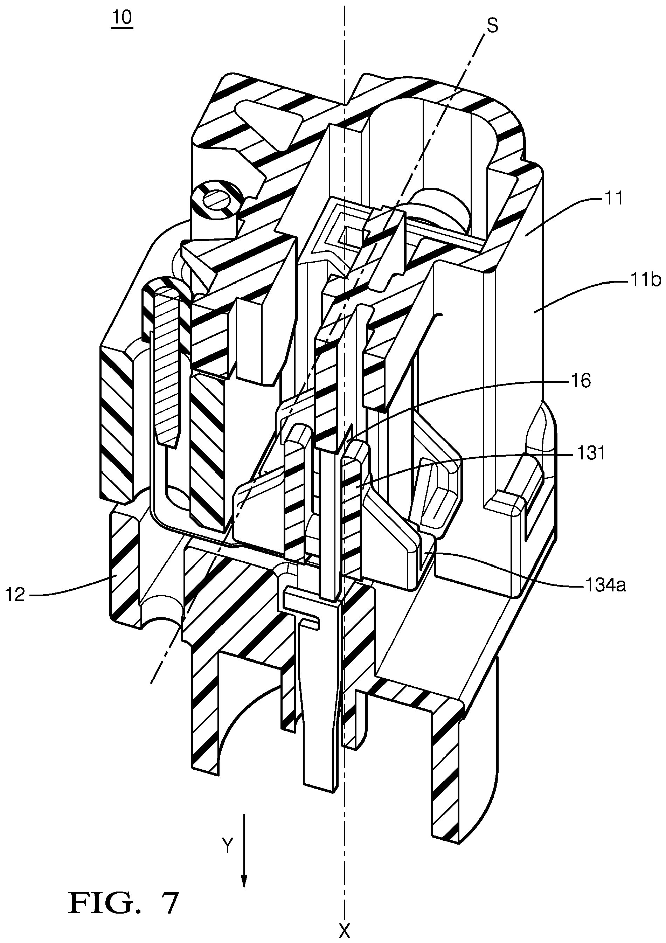

Fig. 7 shows a cut view of the connector whereby the cut layer is arranged along the mating axes to show the position of the release handles in relation to the opening. This view explains why the opening 16 is closed by blocking members 130a, 130b if the connector is connected or disconnected. A first wall 131 of the blocking members 130a,130b is positioned in front of the opening 16. Only in a short moment while connecting or disconnecting the first wall 131 will be moved and uncover the opening 16.

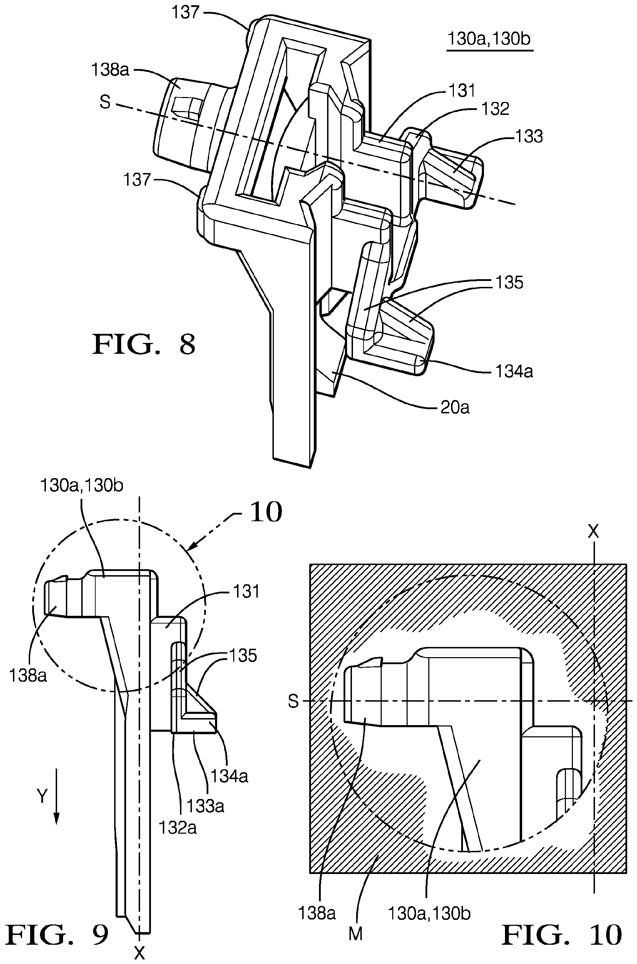

Fig. 8 shows in a perspective view of the locking members 130a, 130b. The locking members 130a, 130b have an elongated shape aligned along the mating axis X when assembled in the connector 10. At the end close to the counter connector there is a latching arm 20a for purpose of locking the connector 10 to the counter connector. On the opposite end the block spring shafts 138a, 138b protrude, perpendicular, designed to carry the hooked end of the springs 40a, 40b. Opposite to the shaft side a structure of walls grows. Beginning with the first wall 131 protruding opposite to the block spring shafts 138a, 138b direction. Perpendicular to the first wall 131 a second wall 132 extends from the end of the first wall 131. Perpendicular to the second wall 132 a third wall 133 extends from the end of the second wall 132. Portions of the second wall 132 and the third wall 133 defining the release handles 134a, 134b. Portions of the second wall 132 and the third wall 133 are sloped 135 in relation to the mating axis X.

Fig. 9 shows a side view of the locking members 130a, 130b. The above mentioned features may be understood better with help of this view.

Fig. 10 shows a side view of a locking member whereby a virtual mirror plane is displayed. The purpose of this view is to visualize that the locking members 130a, 130b have a mirror symmetric shape. The mirror has to be imaged in thus figure. A first mirror axes is defined by the center axes of the block spring shafts 138a, 138b and the second mirror axes is defined by the mating axes X, that is perpendicular to the center axes of the block spring shafts 138a, 138b.

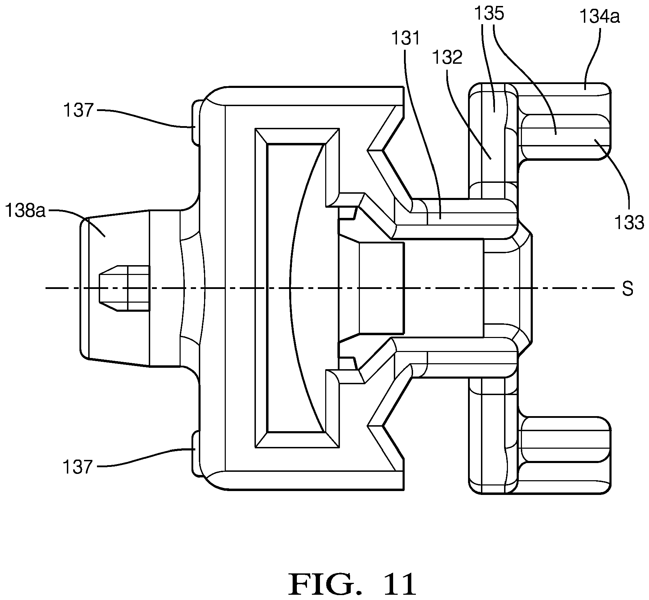

Fig. 11 shows a top view of the locking members 130a, 130b. The above mentioned features may be understood better with help of this view.

## Claims

1. A connector assembly, in particular for airbag restraint systems, comprising:
a connector housing (10) comprising a plug-in portion (13) and two primary latching arms (20a, 20b), arranged on opposite sides of the plug-in portion (13) and secondary locking means (130), assigned to the connector housing (10) and arranged relatively movable to the connector housing (10) from an open position to a locked position, said locking means (130) comprises blocking portions, that are adapted to block a release movement of the latching arms (20a, 20b) when the locking means (130) is in its locked position, wherein the secondary locking means (130) comprises two separate locking members (130a, 130b) and each of the two separate locking members (130a, 130b) is assigned to one of the primary latching arms (20a; 20b) to block a release movement of the assigned latching arm (20a; 20b) and each of the two separate locking members (130a; 130b) is adapted to be independently moveable between the open position and the locked position wherein each locking member (130a, 130b) comprises an actuating release handle (134a,134b) to allow an un-latching of the primary latching arms (20a, 20b), **characterized in that**:
the release handles are arranged adjacent to each other, the connector assembly further comprising a cover (11) at least partly surrounding the secondary locking means (130) around a mating axis (X), wherein the cover has at least one, in mating direction elongated, opening (16) and wherein a portion of the secondary locking means (130) closes the opening in the open position and the locked position, and wherein the cover (11) comprises an outer surface (11b) and a deepening (17), wherein the deepening extends from the outer surface inwards to the cover (11) and along the mating axis (X), defining a channel (18), wherein the at least one elongated opening (16) is located in the channel (18).

2. A connector assembly according to claim 1, wherein the release handles (134a, 134b) are fully received in the channel (18).

3. A connector assembly according to claim 1 or 2, wherein the channel (18) comprises two channel walls (18a, 18b) opposed to each other and spaced apart from each other, extending perpendicular from the outer surface (11b) towards the cover (11) and wherein a bottom wall (18c) connects the two channel walls.

4. A connector assembly according to claim 1, wherein the elongated opening (16) starts on the end of the cover (11) that is adjacent to the plug-in portion (13) of the connector and extends contrary to a mating direction (Y).

5. A connector assembly according to any of the preceding claims, wherein the locking members (130a, 130b) are identical to each other.

6. A connector assembly according to any of the preceding claims, wherein the locking members (130a, 130b) have an elongated body, extending along the mating axis (x).

7. A connector assembly according to any of the preceding claims, wherein the locking members (130a, 130b) comprise a block spring shaft (138a) that protrudes perpendicular to the mating axis (X) and wherein a center axis (S) of the block spring shaft and the mating axis (X) of the connector (19) define a mirror plane (M) and wherein each locking member (130a, 130b) is mirror symmetrical to the mirror plane (M).

8. A connector assembly according claim 6 or 7, wherein a first wall (131) of each locking member (130a, 130b) extends perpendicular from the elongated body along the mating axis (X) and wherein a second wall (132) of each locking member (130a, 130b) extends perpendicular and along the mating axis (X) from a portion of a free end of the first wall.

9. A connector assembly according to claim 8, wherein a third wall (133) of each locking member (130a, 130b) extends perpendicular and along the mating axis (X) from a portion of a free end of the second (132) wall.

10. A connector assembly according to claim 8, wherein the first wall (131) and/or the second wall (132) of each locking member (130a, 130b) comprises sloped portions (135) that are sloped relative to the mating axis (X), wherein the walls (131, 132) increase in size along mating direction (Y).

11. A connector assembly according to claim 8 or 9, wherein a free end (132a) of the second wall (132) and/or a free end (133a) of the third wall (133) of each locking member (130a, 130b), facing toward the counter connector, defines the actuating release handles (134a,134b).

12. A connector assembly according to claims 8 to 11, wherein the length of the first wall (131) of each locking member (130a, 130b) along the mating axis (X) is adapted to cover the openings (16).

13. A connector assembly according to any of the preceding claims, wherein the locking members (130a, 130b) comprise at least two guiding protrusions (137) and the cover (11) comprises guiding areas (11d) on inner walls (11c) of the cover to guide the locking member while mating to the counter connector.

## Patentansprüche

1. Verbinderanordnung, insbesondere für Airbag-Rückhaltesysteme, die aufweist:
ein Verbindergehäuse (10), das einen Steckabschnitt (13) und zwei primäre Einrastarme (20a, 20b) aufweist, die an entgegengesetzten Seiten des Steckabschnitts (13) angeordnet sind, und sekundäre Verriegelungsmittel (130), die dem Verbindergehäuse (10) zugeordnet sind und relativ zu dem Verbindergehäuse (10) von einer offenen Position in eine verriegelte Position bewegbar angeordnet sind, wobei das Verriegelungsmittel (130) Sperrabschnitte aufweist, die ausgebildet sind zum Blockieren einer Freigabebewegung der Verriegelungsarme (20a, 20b), wenn das Verriegelungsmittel (130) in seiner verriegelten Position ist, wobei das sekundäre Verriegelungsmittel (130) zwei getrennte Verriegelungselemente (130a, 130b) aufweist und jedes der zwei getrennten Verriegelungselemente (130a, 130b) einem der primären Verriegelungsarme (20a; 20b) zugeordnet ist, um eine Freigabebewegung des zugeordneten Verriegelungsarms (20a; 20b) zu blockieren, und jedes der zwei getrennten Verriegelungselemente (130a; 130b) ausgebildet ist, unabhängig zwischen der offenen Position und der verriegelten Position bewegbar zu sein, wobei jedes Verriegelungselement (130a, 130b) einen Betätigungsfreigabegriff (134a, 134b) aufweist, um ein Entriegeln der primären Verriegelungsarme (20a, 20b) zu ermöglichen, **dadurch gekennzeichnet, dass**:
die Freigabegriffe aneinander angrenzend angeordnet sind, die Verbinderanordnung weiter eine Abdeckung (11) aufweist, die das sekundäre Verriegelungsmittel (130) um eine Zusammenfügenachse (X) herum zumindest teilweise umgibt, wobei die Abdeckung zumindest eine, in Steckrichtung längliche, Öffnung (16) hat und wobei ein Abschnitt des sekundären Verriegelungsmittels (130) die Öffnung in der offenen Position und der verriegelten Position schließt, und wobei die Abdeckung (11) eine Außenfläche (11b) und eine Vertiefung (17) aufweist, wobei sich die Vertiefung von der Außenfläche nach innen zu der Abdeckung (11) und entlang der Zusammenfügenachse (X) erstreckt, wodurch ein Kanal (18) definiert wird, wobei sich die zumindest eine längliche Öffnung (16) in dem Kanal (18) befindet.

2. Eine Verbinderanordnung gemäß Anspruch 1, wobei die Freigabegriffe (134a, 134b) vollständig in dem Kanal (18) aufgenommen sind.

3. Eine Verbinderanordnung gemäß Anspruch 1 oder 2, wobei der Kanal (18) zwei Kanalwände (18a, 18b) aufweist, die einander gegenüberliegen und voneinander beabstandet sind, und sich senkrecht von der Außenfläche (11b) zu der Abdeckung (11) erstrecken und wobei eine untere Wand (18c) die zwei Kanalwände verbindet.

4. Eine Verbinderanordnung gemäß Anspruch 1, wobei die längliche Öffnung (16) an dem Ende der Abdeckung (11) beginnt, die an den Steckabschnitt (13) des Verbinders angrenzt, und sich entgegen einer Zusammenfügenrichtung (Y) erstreckt.

5. Eine Verbinderanordnung gemäß einem der vorhergehenden Ansprüche, wobei die Verriegelungselemente (130a, 130b) identisch zueinander sind.

6. Eine Verbinderanordnung gemäß einem der vorhergehenden Ansprüche, wobei die Verriegelungselemente (130a, 130b) einen länglichen Körper haben, der sich entlang der Zusammenfügenachse (X) erstreckt.

7. Eine Verbinderanordnung gemäß einem der vorhergehenden Ansprüche, wobei die Verriegelungselemente (130a, 130b) einen Blockfederschaft (138a) aufweisen, der senkrecht zu der Zusammenfügenachse (X) vorsteht, und wobei eine Mittelachse (S) des Blockfederschafts und die Zusammenfügenachse (X) des Verbinders (19) eine Spiegelebene (M) definieren und wobei jedes Verriegelungselement (130a, 130b) zu der Spiegelebene (M) spiegelsymmetrisch ist.

8. Eine Verbinderanordnung gemäß Anspruch 6 oder 7, wobei sich eine erste Wand (131) jedes Verriegelungselements (130a, 130b) senkrecht von dem länglichen Körper entlang der Zusammenfügenachse (X) erstreckt und wobei sich eine zweite Wand (132) jedes Verriegelungselements (130a, 130b) senkrecht und entlang der Zusammenfügenachse (X) von einem Abschnitt eines freien Endes der ersten Wand erstreckt.

9. Eine Verbinderanordnung gemäß Anspruch 8, wobei sich eine dritte Wand (133) jedes Verriegelungselements (130a, 130b) senkrecht und entlang der Zusammenfügenachse (X) von einem Abschnitt eines freien Endes der zweiten (132) Wand erstreckt.

10. Eine Verbinderanordnung gemäß Anspruch 8, wobei die erste Wand (131) und / oder die zweite Wand (132) jedes Verriegelungselements (130a, 130b) geneigte Abschnitte (135) aufweisen, die relativ zu der Zusammenfügenachse (X) geneigt sind, wobei die Wände (131, 132) entlang einer Zusammenfügenrichtung (Y) größer werden.

11. Eine Verbinderanordnung gemäß Anspruch 8 oder 9, wobei ein freies Ende (132a) der zweiten Wand (132) und / oder ein freies Ende (133a) der dritten Wand (133) jedes Verriegelungselements (130a, 130b), dem Gegenverbinder zugewandt, die Betätigungsfreigabegriffe (134a, 134b) definieren.

12. Eine Verbinderanordnung gemäß den Ansprüchen 8 bis 11, wobei die Länge der ersten Wand (131) jedes Verriegelungselements (130a, 130b) entlang der Zusammenfügenachse (X) ausgebildet ist zum Abdecken der Öffnungen (16).

13. Eine Verbinderanordnung gemäß einem der vorhergehenden Ansprüche, wobei die Verriegelungselemente (130a, 130b) zumindest zwei Führungsvorsprünge (137) aufweisen und die Abdeckung (11) Führungsbereiche (11d) an Innenwänden (11c) der Abdeckung aufweist, um das Verriegelungselement bei einem Zusammenfügen mit dem Gegenverbinder zu führen.

## Revendications

1. Ensemble connecteur, en particulier pour des systèmes de retenue à airbag, comprenant :
un boîtier de connecteur (10) comprenant une portion à enficher (13) et deux bras de verrouillage primaires (20a, 20b), agencés sur des côtés opposés de la portion à enficher (13) et des moyens de blocage secondaires (130), associés au boîtier de connecteur (10) et agencés relativement déplaçables vers le boîtier de connecteur (10) depuis une position ouverte vers une position bloquée, lesdits moyens de blocage (130) comprenant des portions de blocage, qui sont adaptées à bloquer un mouvement de libération des bras de verrouillage (20a, 20b) quand les moyens de blocage (130) sont dans leur position bloquée, dans lequel les moyens de blocage secondaires (130) comprennent deux éléments de blocage séparés (130a, 130b) et chacun des deux éléments de blocage séparés (130a, 130b) est associé à l'un des bras de verrouillage primaires (20a ; 20b) pour bloquer un mouvement de libération du bras de verrouillage associé (20a ; 20b) et chacun des deux éléments de blocage séparés (130a ; 130b) est adapté à être déplaçable indépendamment entre la position ouverte et la position bloquée, dans lequel chaque élément de blocage (130a, 130b) comprend une manette de libération d'actionnement (134a, 134b) pour permettre un déverrouillage des bras de verrouillage primaires (20a, 20b), **caractérisé en ce que** :
les manettes de libération sont agencées adjacentes l'une à l'autre, l'ensemble connecteur comprenant en outre un couvercle (11) qui entoure au moins partiellement les moyens de blocage secondaires (130) autour d'un axe d'accouplement (X), dans lequel le couvercle a au moins une ouverture (16), allongée en direction d'accouplement, et dans lequel une portion des moyens de blocage secondaires (130) ferme l'ouverture dans la position ouverte et la position bloquée, et dans lequel le couvercle (11) comprend une surface extérieure (11b) et une dépression (17), ladite dépression s'étendant depuis la surface extérieure vers l'intérieur en direction du couvercle (11) et le long de l'axe d'accouplement (X), définissant un canal (18), et dans lequel ladite au moins une ouverture allongée (16) est située dans le canal (18).

2. Ensemble connecteur selon la revendication 1, dans lequel les manettes de libération (134a, 134b) sont entièrement reçues dans le canal (18).

3. Ensemble connecteur selon la revendication 1 ou 2, dans lequel le canal (18) comprend deux parois de canal (18a, 18b) opposées l'une à l'autre et espacées l'une vis-à-vis de l'autre, s'étendant perpendiculairement depuis la surface extérieure (11b) vers le couvercle (11), et dans lequel une paroi de fond (18c) connecte les deux parois de canal.

4. Ensemble connecteur selon la revendication 1, dans lequel l'ouverture allongée (16) commence sur l'extrémité du couvercle (11) qui est adjacente à la portion à enficher (13) du connecteur et s'étend en sens contraire à une direction d'accouplement (Y).

5. Ensemble connecteur selon l'une quelconque des revendications précédentes, dans lequel les éléments de blocage (130a, 130b) sont identiques les uns aux autres.

6. Ensemble connecteur selon l'une quelconque des revendications précédentes, dans lequel les éléments de blocage (130a, 130b) ont un corps allongé, s'étendant le long de l'axe d'accouplement (X).

7. Ensemble connecteur selon l'une quelconque des revendications précédentes, dans lequel les éléments de blocage (130a, 130b) comprennent une tige pour ressort-bloc (138a) qui se projette perpendiculairement à l'axe d'accouplement (X), et dans lequel un axe central (S) de la tige pour ressort-bloc et l'axe d'accouplement (X) du connecteur (19) définissent un plan de symétrie (M), et dans lequel chaque élément de blocage (130a, 130b) est symétrique par rapport au plan de symétrie (M).

8. Ensemble connecteur selon la revendication 6 ou 7, dans lequel une première paroi (131) de chaque élément de blocage (130a, 130b) s'étend perpendiculairement depuis le corps allongé le long de l'axe d'accouplement (X), et dans lequel une seconde paroi (132) de chaque élément de blocage (130a, 130b) s'étend perpendiculairement et le long de l'axe d'accouplement (X) depuis une portion d'une extrémité libre de la première paroi.

9. Ensemble connecteur selon la revendication 8, dans lequel une troisième paroi (133) de chaque élément de blocage (130a, 130b) s'étend perpendiculairement et le long de l'axe d'accouplement (X) depuis une portion d'une extrémité libre de la seconde paroi (132).

10. Ensemble connecteur selon la revendication 8, dans lequel la première paroi (131) et/ou la seconde paroi (132) de chaque élément de blocage (130a, 130b) comprend des portions en pente (135) qui sont en pente relativement à l'axe d'accouplement (X), dans lequel les parois (131, 132) ont une taille qui augmente le long de la direction d'accouplement (Y).

11. Ensemble connecteur selon la revendication 8 ou 9, dans lequel une extrémité libre (132a) de la seconde paroi (132) et/ou une extrémité libre (133a) de la troisième paroi (133) de chaque élément de blocage (130a, 130b), tournée en direction du connecteur antagoniste, définit les manettes de libération d'actionnement (134a, 134b).

12. Ensemble connecteur selon les revendications 8 à 11, dans lequel la longueur de la première paroi (131) de chaque élément de blocage (130a, 130b) le long de l'axe d'accouplement (X) est adaptée à couvrir les ouvertures (16).

13. Ensemble connecteur selon l'une quelconque des revendications précédentes, dans lequel les éléments de blocage (130a, 130b) comprennent au moins deux projections de guidage (137) et le couvercle (11) comprend des zones de guidage (11b) sur des parois intérieures (11c) du couvercle pour guider l'élément de blocage pendant l'accouplement sur le connecteur antagoniste.
